# FASCICULE DE BREVET EUROPEEN

(11) **EP 4 359 292 B1**
(45) Date de publication et mention de la délivrance du brevet: **05.11.2025**
(21) Numéro de dépôt: 22735213.5
(22) Date de dépôt: 13.06.2022
(51) Int. Cl.: B62M 6/35, B62M 6/75, B62M 13/00, F16H 55/34, B62D 59/04

(54) **GALET METALLIQUE D'ENTRAINEMENT OPTIMISE**
OPTIMIERTE METALLISCHE ANTRIEBSROLLE
OPTIMISED METAL DRIVE ROLLER

(30) Priorité: 21.06.2021 FR 2106556
(43) Date de publication de la demande: 01.05.2024
(73) Titulaire: COMPAGNIE GENERALE DES ETABLISSEMENTS MICHELIN, 63000 Clermont-Ferrand (FR)
(72) Inventeur: POTIN, Yves, 63040 CLERMONT-FERRAND CEDEX 9 (FR); PELISSE, Matthieu, 63040 CLERMONT-FERRAND CEDEX 9 (FR); HENNEBERT, Guillaume, 63040 CLERMONT-FERRAND CEDEX 9 (FR)
(74) Mandataire: M.F.P. Michelin
(86) Numéro de dépôt international: PCT/FR2022/051115
(87) Numéro de publication internationale: WO 2022/269159

(56) Documents cités:
- EP-A1- 1 985 529
- EP-A2- 0 145 431
- EP-A2- 3 543 104
- FR-A1- 2 791 113
- GB-A- 2 436 671
- KR-A- 20020 090 073

## Description

La présente invention a pour objet un galet métallique d'entrainement, destiné plus particulièrement à équiper tout moyen de transport léger utilisant principalement des pneumatiques de vélo et ayant un moteur ou une assistance électrique tel qu'un vélo, un tricycle ou un fauteuil électrique, mais pas uniquement. Il peut servir à entraîner une multitude de systèmes tournants en fonction des besoins. La présente invention inclut également le système adapté à l'utilisation dudit galet.

Il existe une multitude de système d'entrainement de roue pour des vélos à assistance électriques ou pour fauteuil roulant. La roue peut être entrainée par un galet dont la surface de roulement est pour partie en caoutchouc par contact avec la partie métallique de la roue mais ce système perd beaucoup de son efficacité par temps de pluie, le métal mouillé étant particulièrement glissant. Il n'est pas possible d'entrainer la roue par un contact avec ce type de galet sur le flanc du pneumatique car la température de contact devient rapidement trop élevée et le pneumatique ou le galet se détériorent rapidement. Par ailleurs en condition humide le contact de deux surfaces caoutchouteuses est peu adhérente.

De nombreux systèmes utilisent des galets avec un contact sur la bande de roulement mais cela contribue grandement à diminuer la durée de vie du pneumatique d'autant que la bande de roulement du pneumatique est conçue pour offrir une bonne adhérence par tout temps sur des chemins ou des routes goudronnées en disposant de motifs de sculpture mais pas pour passer du couple via un galet plus ou moins agressif. Les galets d'entraînement métalliques moletés sont particulièrement intéressants pour leur longévité mais l'usure qu'ils provoquent par rainurage est particulièrement rapide.

Un autre système intéressant consiste à disposer sur le flanc du pneumatique une gomme crantée et de l'entraîner via un galet cranté, les crans s'engrenant les uns dans les autres amenant peu de frottements donc d'usure ou d'échauffement (FR2998858). Ce système offre un très bon passage de couple même par temps de pluie et préserve d'une usure trop rapide la bande de roulement. Cependant il demande que le galet et le pneumatique soient positionnés précisément, ce qui nécessite l'intervention de personnes professionnelles pas toujours facilement disponibles. Document KR20020090073A montre en partie le préambule de la revendication 1.

Les inventeurs se sont donnés pour objectif d'améliorer le dispositif en améliorant chacune des parties. L'optimisation du galet d'entraînement métallique améliorera la transmission du couple même en condition humide et sans nécessiter une position très précise du galet vis-à-vis du pneumatique ou d'un élément tournant muni d'une bande caoutchouteuse en contact avec ledit galet et sans dégrader la pérennité dans le temps des pièces du dispositif que ce soit le galet d'entrainement ou la bande caoutchouteuse de contact.

Cet objectif a été atteint, selon l'invention, par un Galet d'entrainement métallique comprenant :
- Un axe de révolution,
- Une surface porteuse externe tronconique, comprenant une ou plusieurs surfaces porteuses externes utiles comprises entre deux plans circonférentiels,
- la ou les surfaces porteuses externes utiles comprenant une pluralité d'indenteurs
- les indenteurs étant d'une hauteur radiale hr comprise entre 0.5 mm et 5 mm, de longueur circonférentielle moyenne lc, de largeur axiale maximale lam, terminés par une pointe vive, les indenteurs couvrant au moins 80% de chaque surface porteuse externe utile,
- pour chaque surface porteuse externe utile, les projections orthogonales des pointes vives des indenteurs sur l'axe de révolution du galet étant sensiblement équiréparties sur l'axe de révolution du galet.

Un galet d'entrainement ayant une géométrie de révolution par rapport à un axe de rotation, la géométrie du galet est décrite dans un plan méridien, c'est à dire un plan contenant l'axe de rotation du galet. Pour un plan méridien donné, les directions radiale, axiale et circonférentielle désignent respectivement les directions perpendiculaire à l'axe de rotation du galet, parallèle à l'axe de rotation du galet et perpendiculaire au plan méridien.

Le galet selon l'invention est tronconique ou cylindrique, un galet cylindrique n'étant qu'un tronc de cône dont la génératrice est parallèle à l'axe de révolution du galet. L'intérêt d'avoir un galet tronconique est de pouvoir faire des réglage de contact avec l'objet à entraîner selon deux directions. Un premier réglage peut se faire en approchant l'axe du galet de la surface de contact de l'objet à entraîner et un réglage plus fin peut s'effectuer en déplaçant le galet le long de son axe soit pour augmenter la pression de contact en allant vers un diamètre moyen de la zone de contact plus grand soit inversement pour diminuer la pression de contact. Cela permet de régler très facilement les difficultés de positionnement du galet vis-à-vis de l'objet à entraîner.

Pour l'entraînement d'un pneumatique au niveau de son flanc, le galet sera obligatoirement tronconique. En effet outre d'améliorer la facilité de réglage, il faut tenir compte que pour un tour de roue le point de contact du galet sur le rayon le plus radialement extérieur du pneumatique parcourra une distance supérieure à celle du point de contact du galet sur le rayon le plus radialement intérieur du pneumatique. Pour un galet cylindrique, cela impliquerait l'existence de glissements sur toute la surface de contact excepté pour le point de contact situé sur le rayon moyen de la surface de contact avec pneumatique. Ce glissement génèrerait une usure diminuant la durée de vie du pneumatique ce que l'invention cherche à éviter. Pour une usure optimisée, l'angle de la génératrice du tronc de cône fait avec l'axe de révolution un angle (a) égal à l'arcsinus du rapport entre le plus petit rayon de la pointe d'un indenteur du galet d'entrainement et la distance à l'axe de rotation du pneumatique de ce point de contact. En pratique et de préférence, l'angle de la génératrice du tronc de cône fait avec l'axe de révolution un angle (a) compris entre 0 et 3° de préférence entre 1 et 2°.

Les indenteurs sont des motifs sur la surface porteuse en forme de cônes ou de pyramides à base carrée ou rectangulaire ou quadrangulaire sur la surface porteuse et dont les pointes vives sont les parties les plus radialement extérieures du galet d'entrainement. Ces indenteurs sont conçus pour que leurs pointes vives viennent en contact avec une bande de contact positionnée sur l'objet tournant à entraîner en limitant le glissement. Leurs hauteurs radiales sont comprises entre 0.5 et 5 mm, de préférence inférieures à 2 mm. Pour un galet de forme tronconique, il existe plusieurs variantes de l'invention, une selon laquelle la surface porteuse est elle-même tronconique et les indenteurs sont de même hauteur radiale, une autre selon laquelle la surface porteuse est elle-même cylindrique et les indenteurs sont de hauteur variable afin que les pointes vives des indenteurs soient sur un cône. La première forme a l'intérêt d'une définition plus simple de l'objet mais ces deux modes de réalisation sont chacune objet de l'invention.

De préférence les indenteurs sont de forme pyramidale de base rectangulaire ou quadrangulaire ou carrée, ce qui est plus facilement réalisable par usinage.

Il convient d'avoir une multiplicité de points de contact entre le galet et la bande de contact de l'objet à entraîner. Il convient donc que les indenteurs couvrent au moins 80% des surfaces porteuses utiles.

Si les pointes vives appartiennent sensiblement au même plan perpendiculaire à l'axe de rotation, une usure irrégulière de la bande de contact de l'objet entrainé, va rapidement apparaître au niveau du rayon de contact des différentes pointes des indenteurs. Pour éviter ce type d'usure de la bande de contact, il est suffisant que les pointes des différents indenteurs ne viennent pas en contact sur le même rayon, pour cela il suffit que les pointes vives des indenteurs soient réparties soit de manière aléatoire soit de manière géométrique de telle sorte que les projections perpendiculaires à l'axe de révolution des pointes vives sur l'axe de révolution soient sensiblement équiréparties. A savoir que toute portion de largeur lam d'une surface porteuse utile comprend un nombre moyen d'indenteurs n dont la pointe vive est comprise dans la portion considérée, la distance moyenne axiale entre chaque projection perpendiculaires sur l'axe de révolution, d'une projection à la suivante est supérieure à 0.05 mm comprise entre lam/4(n-1) et 2lam(n-1). De préférence, sur chaque surface porteuse externe utile, les indenteurs sont répartis selon une trajectoire hélicoïdale d'un pas égal à la largeur axiale maximale lam des indenteurs. Cette répartition géométrique assure que les projections perpendiculaires à l'axe de révolution des pointes vives sur l'axe de révolution soient sensiblement équiréparties.

La répartition des indenteurs selon une trajectoire hélicoïdale sur une surface externe utile génère pour celle-ci une force axiale qui tend à cisailler inutilement le matériaux de la bande de contact de l'objet à entrainer. Pour résoudre ce problème, une solution avantageuse est que le galet d'entrainement comprenne deux surfaces porteuses externes et que sur chaque surface porteuse externe utile, les indenteurs sont répartis selon une trajectoire hélicoïdale d'un pas égal à la largeur axiale maximale lam des indenteurs, les angles des trajectoires hélicoïdales respectifs sur chaque surface porteuse externe utile par rapport l'axe de révolution du galet étant de signes opposés d'une surface porteuse externe utile à l'autre.

En fonctionnement, chaque contact d'une pointe du galet d'entrainement avec la bande de contact de l'objet à entrainer, va générer un bruit. Si le pas circonférentiel des pointes sur la circonférence est constant, le bruit se concentre sur une fréquence. Ceci augmente considérablement sa nuisance. Une solution avantageuse pour résoudre ce problème est que les indenteurs aient des longueurs circonférentielles lci variables circonférentiellement dans une plage de valeurs de plus ou moins 25% autour de la longueur circonférentielle moyenne lc. Une répartition régulière des longueurs circonférentielles dans cette plage permet une bonne répartition de la puissance sonore.

Avantageusement le galet d'entrainement est inoxydable. Si son utilisation est prévue en extérieur, il est essentiel qu'il ne rouille pas car la rouille constituerait une interface entre la bande de contact et le galet. La rouille diminuerait la capacité du système à transmettre du couple. Les aciers inoxydables usuels sont généralement des aciers doux insuffisamment résistant à l'usure pour permettre une durée de vie du système suffisamment longue. Il est préféré que les indenteurs soient en acier inoxydable d'une dureté Vickers au moins égale à 560 telle que du maraging après un traitement thermique, par exemple de 4h à 480°C.

Pour son utilisation pour des vélos à assistance électrique ou des fauteuils roulants à assistance électrique, la hauteur axiale totale du galet d'entrainement est comprise entre 10 et 30 mm. Cela correspond à la hauteur radiale disponible sur la hauteur du flanc d'un pneumatique de vélo pour y coller une bande de contact pouvant entrer en contact avec le galet d'entrainement.

De préférence la surface porteuse externe comprend à la base de chaque indenteur un orifice apte à évacuer l'eau depuis la surface porteuse externe vers l'axe de rotation du galet. Cette évacuation de l'eau est intéressante pour un usage en extérieur et pour avoir une adhérence optimale entre le galet d'entrainement et la bande de contact même en temps de pluie.

L'invention consiste en un galet d'entrainement ainsi décrit et un dispositif comprenant un tel galet dans lequel ledit galet entraîne par contact un objet en rotation, les indenteurs dudit galet étant en contact en rotation avec une bande de matériaux déformable dont la rigidité est inférieure à 100 MPa. Le matériaux en contact en rotation avec le galet d'entrainement doit être déformable pour éviter que les indenteurs ne s'émoussent et pour que la transmission des efforts moteurs soit possible. De préférence le galet est en contact en rotation avec une bande d'un mélange caoutchouteux, les mélanges caoutchouteux ayant démontré leur intérêt pour leur capacité d'adhérence en condition sèche ou mouillée et pour leur résistance à l'usure. De préférence, le mélange caoutchouteux constituant la bande de contact avec l'indenteur, a une dureté Shore A comprise entre 55 et 75, et la température de transition vitreuse où sa perte dynamique tgδ atteint son maximum, est comprise entre -15°C et 0°C. L'expression « mélange caoutchouteux » ou caoutchouc désigne une composition de caoutchouc comportant au moins un élastomère et une charge.

Une caractéristique physique usuelle d'un mélange élastomérique est sa température de transition vitreuse Tg, température à laquelle le mélange élastomérique passe d'un état caoutchouteux déformable à un état vitreux rigide. La température de transition vitreuse Tg d'un mélange élastomérique est généralement déterminée lors de la mesure des propriétés dynamiques du mélange élastomérique, sur un viscoanalyseur par exemple de type Metravib VA4000, selon la norme ASTM D 5992-96. La mesure des propriétés dynamiques est réalisée sur un échantillon de mélange élastomérique vulcanisé, c'est dire cuit jusqu'à un taux de conversion d'au moins 90%, l'échantillon ayant la forme d'une éprouvette cylindrique ayant une épaisseur égale à 2 mm et une section égale à 78,5 mm². On enregistre la réponse de l'échantillon de mélange élastomérique à une sollicitation sinusoïdale en cisaillement simple alterné, ayant une amplitude crête-crête égale à 0,7 MPa et une fréquence égale à 10 Hz. On effectue un balayage en température à vitesse de montée en température constante de +1.5°C/min. Les résultats exploités sont généralement le module complexe de cisaillement dynamique G*, comprenant une partie élastique G' et une partie visqueuse G", et la perte dynamique tgδ, égale au rapport G''/G'. Une température de transition vitreuse Tg du mélange caoutchouteux est la température à laquelle la perte dynamique tgδ atteint un maximum lors du balayage en température. Selon les formulations et le mélange de plusieurs types de mélanges, il peut y avoir un ou plusieurs maxima locaux. Pour l'invention, le maximum de la perte dynamique tgδ considéré est le maximum absolu de la courbe en balayage.

Le comportement mécanique d'un mélange élastomérique peut être caractérisé, en statique, par sa dureté Shore A, mesurée conformément aux normes DIN 53505 ou ASTM 2240, et, en dynamique, par son module complexe de cisaillement dynamique G*, tel que précédemment défini, à une température donnée, typiquement à 23°C. La dureté Vickers est mesurée d'après la norme ISO 6507 / ASTM E 384.

Pour une dureté shore inférieure à 55 ou supérieure à 75, le galet d'entrainement ne peut pas transmettre le couple soit, en n'indentant pas suffisamment la surface de la bande de contact, soit en la déformant trop facilement sans permettre d'efforts de cisaillement. Si le maximum de la perte dynamique tgδ est en dehors de la plage revendiquée, le mélange de la bande de contact est détruit soit par fissuration, soit par réversion due à un excès de température.

Le dispositif peut être utilisé pour entrainer toutes sortes d'objets tournant disposant d'une bande de contact notamment en caoutchouc, néanmoins il est plus particulièrement conçu pour entrainer les roues d'un véhicule léger tel qu'un vélo, tricycle, fauteuil roulant électrique dans lequel le galet selon l'invention entraine au moins une roue du véhicule par un contact en rotation avec une bande de mélange caoutchouteux. La bande d'entrainement en mélange caoutchouteux peut être positionnée sur tout endroit de ladite roue du véhicule, notamment sur l'intérieur de la jante, sur l'un des flancs de la jante, sur l'un des flancs du pneumatique, sur la bande de roulement du pneumatique. En fonction de la position où s'effectue le contact le galet pourra être cylindrique, par exemple sur l'intérieur de la jante, sur la bande de roulement du pneumatique.

Si la position où s'effectue le contact est le flanc d'une jante ou d'un pneumatique, le galet sera tronconique. Ainsi de préférence, le dispositif selon l'invention sera un véhicule léger tel qu'un vélo, tricycle, fauteuil roulant dans lequel le galet d'entrainement métallique selon l'invention entraine une ou les roues par contact en rotation avec au moins un pneumatique, le contact se faisant sur le flanc dudit pneumatique et dans lequel l'angle de la génératrice du tronc de cône fait avec l'axe de révolution du galet est compris entre 0 et 3° de préférence entre 1 et 2°. Il est particulièrement intéressant que le contact ait lieu sur le flanc du pneumatique pour ne pas générer d'usure au niveau de la bande de roulement du pneumatique, et pour garder une qualité adhérence constante malgré l'usure de la bande de roulement et afin que l'aire de contact entre le galet d'entrainement et la bande de contact soit maximale. En effet, comparativement aux autres zones de contact possible comme le flanc de la jante ou l'intérieur de la jante qui sont non déformables, le flanc déformable du pneumatique permet de maximiser le nombre d'indenteurs en contact et d'ainsi maximiser la parfaite adhérence des deux parties, ce qui est extrêmement intéressant en termes d'économie d'énergie pour un vélo électrique et en termes de précision de conduite pour un fauteuil roulant à assistance électrique notamment.

Les caractéristiques de l'invention sont illustrées par les figures de 1 à 6 schématiques et non représentées à l'échelle.

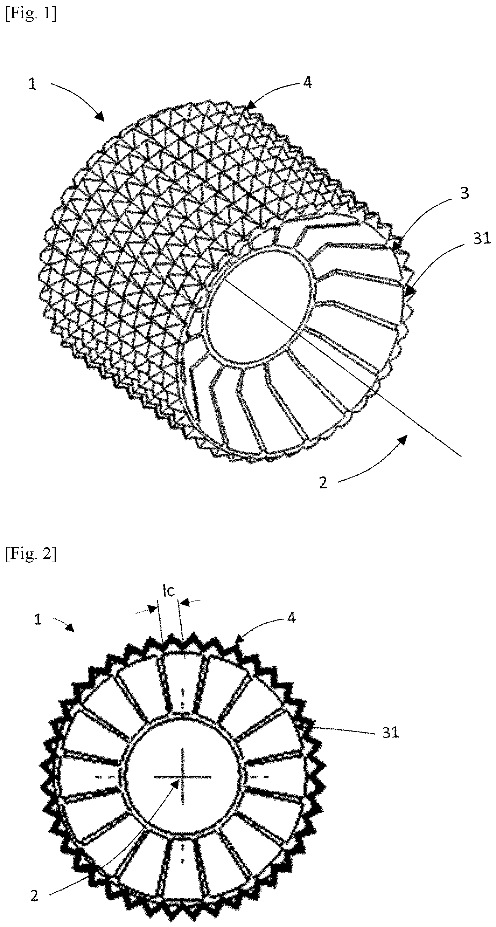

La figure 1 représente une vue en perspective cavalière un galet métallique 1 d'entrainement selon l'invention avec son axe de rotation 2. Ledit galet 1 dispose d'une surface porteuse externe 3 de forme tronconique comprenant une unique surface porteuse utile 31 ici égale à la surface porteuse 3. La surface porteuse utile est couverte d'indenteurs 4 sur sa totalité.

La figure 2 représente une coupe du galet 1 selon un plan perpendiculaire à son axe de rotation 2. Il permet d'illustrer la longueur circonférentielle moyenne lc, chacun des indenteurs étant ici d'égale longueur.

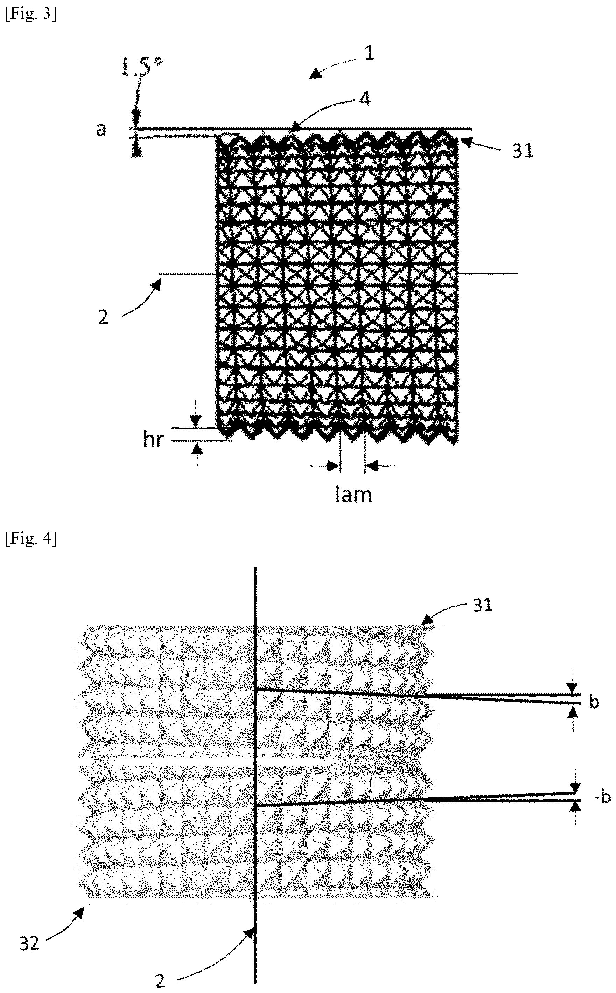

La figure 3 représente une vue de profil, la figure contenant l'axe de rotation du galet. Elle représente l'angle a du tronc de cône ici égal à 1.5°, la hauteur radiale hr des indenteurs et la largeur axiale maximale (lam), les indenteurs étant tous de même largeur axiale en l'occurrence.

La figure 4 représente un galet d'entrainement selon l'invention présentant deux surfaces porteuses externes utiles 31 et 32 dans lequel sur chaque surface porteuse externe utile 31, 32 les indenteurs 4 sont répartis selon une trajectoire hélicoïdale d'un pas égal à la largeur axiale maximale lam des indenteurs 4, les angles des trajectoires hélicoïdales b, -b par rapport à la perpendiculaire à l'axe de révolution 2 étant de signes opposés d'une surface utile 31 à l'autre 32.

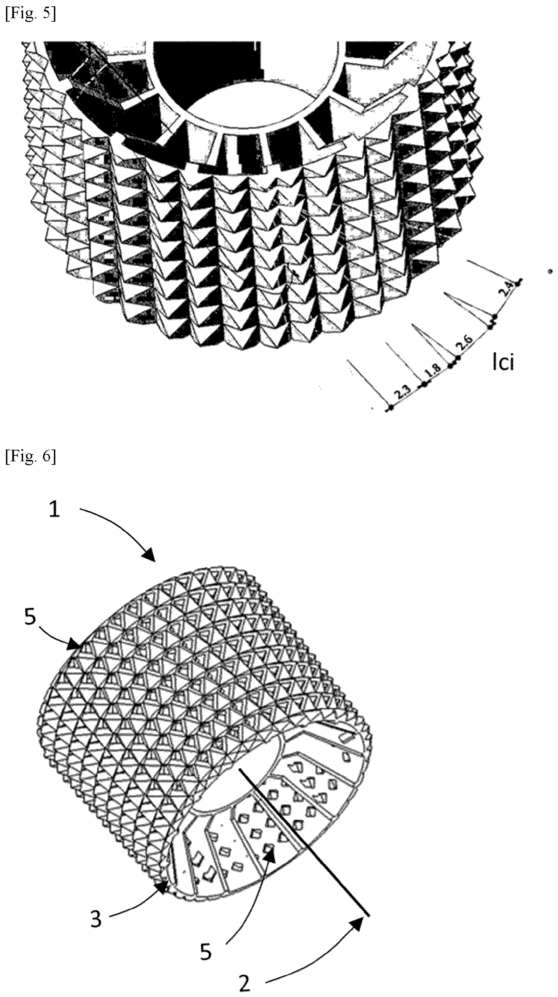

La figure 5 représente une variante de l'invention dans laquelle lequel les longueurs circonférentielles lci des indenteurs 4 sont circonférentiellement variables dans une plage de plus ou moins 25% (entre 1.8 mm et 2.6 mm) autour de la longueur circonférentielle moyenne lc, ici égale à 2.2 mm.

La figure 6 représente une variante de l'invention dans laquelle la surface porteuse externe 3 comprend à la base de chaque indenteur un orifice 5 apte à évacuer l'eau depuis la surface porteuse externe 3 vers l'axe de rotation 2 du galet 1.

La mise au point de l'invention a nécessité plusieurs phases de tests, une sur la forme du galet métallique d'entrainement, l'autre sur le mélange caoutchouteux apte à transmettre l'effort sans se détériorer dans le temps. Plusieurs tests sur machine ont été réalisés :
- Un test d'adhérence en condition humide : une roue de vélo dotée d'un dynamomètre est entrainée par un moteur doté du galet d'entrainement testé. Sur le flanc du pneumatique est collée une bande lisse du mélange de caoutchouteux testé. Le test est réalisé avec une pulvérisation d'eau. Les solutions ne permettant pas de passer un couple de 20 Nm sont éliminées.
- Un test d'usure de 5000 km sur ce même banc mais sans pulvérisation d'eau. Les solutions présentant de l'usure sont écartées.

Un galet métallique à aubes dont le contact avec la bande de mélange caoutchouteux est effectué par des lignes de longueur égale à la hauteur du galet, a été testé. Cette solution est très efficace pour transmettre du couple mais la bande de contact est détériorée avant même 10 km.

Des galets métalliques dont les indenteurs sont des indenteurs pyramidaux de hauteur variable depuis 0,1 mm jusque 5 mm, ont été testés. Les galets dont la hauteur est inférieure à 0,5 mm ne permettent pas de passer un couple au moins égal à 20 Nm. Il n'est pas intéressant d'aller au-delà de 5 mm de haut, pour des raisons de coût d'usinage.

Les galets métalliques moletés dont les indenteurs ne suivant pas une trajectoire hélicoïdale ne sont plus capable de fournir le couple demandé après 200 km environ en raison du rainurage de la bande de contact en mélange caoutchouteux.

Pour la bande de contact de mélange caoutchouteux collée sur le flanc du pneumatique, 25 mélanges caoutchouteux ont été testés. Leurs duretés Shore A étaient comprises entre 50 et 80, paramètre en lien avec leurs rigidités et leurs températures de transition vitreuse, paramètre en lien avec l'adhérence, étaient comprises entre -90°C et -10°C. Les 3 solutions satisfaisantes pour les deux tests ont toutes une dureté Shore A comprise entre 55 et 75, et une température de transition vitreuse où la perte dynamique tgδ est maximale, comprise entre -15°C et 0°C.

L'expérience a montré par exemple que les mélanges caoutchouteux des bandes de roulement des pneumatiques de vélo, dont les températures de transition vitreuse sont extrêmement basses, comprises usuellement entre -50°C et -60°C ne permettent pas à l'invention de fonctionner. En effet ces mélanges sont conçus pour adhérer sous une pression élevée entre 8 et 15 bars sur de l'asphalte ou un sol nu et non pour être entrainés par un galet métallique muni d'indenteurs sollicitant le mélange à une fréquence décalée de l'usage pour lequel ils sont conçus. Ces mélanges étaient rapidement détruits par le galet.

La solution avec un galet tel que décrit dans l'invention associé à une bande de contact en mélange caoutchouteux ayant les propriétés mentionnées a passé les tests de sélection avec succès.

Un test de validation sur un vélo à assistance électrique en usage urbain sur 1500 km a permis de valider la solution retenue en condition réelle d'usage. Une bande de contact en mélange caoutchouteux était collée sur le flanc. Elle avait une dureté shore égale à 63 et une température de transition vitreuse égale à -5 °C

L'invention a également été testée sur un fauteuil roulant muni de moteurs pour une assistance électrique et muni de roues de vélos de 24 pouces (ou 540 mm). 4 solutions ont été testées avec des galets d'entraînement différents de même diamètre de 23 mm et de 20 mm de hauteur :
- Une solution A où l'entrainement de la roue se fait par un galet avec une garniture en caoutchouc frottant sur le flanc métallique de la roue,
- Une solution B où l'entrainement de la roue se fait par un galet avec une garniture en caoutchouc identique à A frottant sur le flanc du pneumatique muni d'une bande d'entrainement circonférentielle lisse,
- Une solution C où l'entrainement de la roue se fait par un galet avec une garniture en matériau plastique dentée s'engrenant dans le flanc du pneumatique, le flanc du pneumatique étant pourvue d'un système d'engrènement complémentaire ad-hoc pour assurer une transmission des efforts moteurs et freineurs
- Une solution D où l'entrainement de la roue se fait par un galet tronconique d'un angle a égal à 1.8° tel que décrit par l'invention muni d'indenteurs en maraging pyramidaux de 1.2 mm de haut, d'une longueur circonférentielle moyenne égale à 2 mm, d'une largeur axiale maximale égale à 2 mm, les indenteurs couvrant 100% de la surface porteuse, les indenteurs étant disposés suivant une trajectoire hélicoïdale d'un pas de 2 mm, le galet étant en contact avec le flanc du pneumatique muni d'une bande d'entrainement circonférentielle lisse ayant une dureté shore égale à 63 et une température de transition vitreuse égale à -5°C.

Les différentes solutions ont été testées en condition urbaine sur un même trajet d'une heure avec des trottoirs, des dénivelés. Elles ont également été testées sur des pistes extérieures en conditions humides avec un test de maniabilité de slalom autour de cônes d'évitement.

Les solutions A, B, et D offrent une simplicité de montage largement supérieure à la solution C qui nécessite un placement très précis du galet et de la roue peu compatible avec l'utilisation d'un fauteuil dans des conditions urbaines. En effet en ville, le fauteuil prend des chocs trottoir qui peuvent dérègler cette position. Elle nécessite également la position sur le pneumatique de façon très précise d'un système d'engrènement.

Les solutions A et B offrent une bonne transmission des efforts en condition sèche. La solution A la plus simple d'installation techniquement s'avère peu efficace en condition humide, les galets en caoutchouc glissant sur l'acier de la jante ne permettant pas de réussir le test de maniabilité sans toucher les cônes d'évitement. La solution B a le même problème que la solution A, le contact de deux surfaces de caoutchoucs mouillés étant peu adhérant. A ceci s'ajoute en outre un problème d'échauffement du caoutchouc du galet en utilisation sèche pour la solution B qui rend cette solution peu endurante.

L'invention offre une solution au problème en préservant une très grande maniabilité en condition humide, équivalente à la solution C, les indenteurs venant rompre le film d'eau à la surface de contact avec le pneumatique. La souplesse de contact entre le galet et le pneumatique permet un positionnement extrêmement simple de l'un sur l'autre. Après une heure d'usage urbain, la bande de caoutchouc collée sur le flanc du pneumatique ne présente aucune trace d'usure.

L'invention permet donc bien d'apporter une solution simple à monter, assurant une excellente maniabilité en condition humide et intéressante en usure donc pérenne dans le temps.

## Revendications

1. Galet (1) d'entrainement métallique comprenant :
• Un axe de révolution (2),
• Une surface porteuse externe (3) tronconique, comprenant une ou plusieurs surfaces porteuses externes utiles (31, 32) comprises entre deux plans circonférentiels,
• la ou les surfaces porteuses externes utiles (31, 32) comprenant une pluralité d'indenteurs (4)
• les indenteurs (4) étant d'une hauteur radiale (hr) comprise entre 0.5 mm et 5 mm, de longueur circonférentielle moyenne lc, de largeur axiale maximale lam, terminés par une pointe vive, les indenteurs (4) couvrant au moins 80% de chaque surface porteuse externe utile (31 ,32),
• **Caractérisé en ce que,** pour chaque surface porteuse externe utile (31,32), les projections orthogonales des pointes vives des indenteurs (4) sur l'axe de révolution (2) du galet (1) sont sensiblement équiréparties sur l'axe de révolution (2) du galet (1),
• **en ce que** le galet (1) d'entrainement métallique comprend deux surfaces porteuses externes utiles (31, 32) dans lequel, sur chaque surface porteuse externe utile (31, 32), les indenteurs (4) sont répartis selon une trajectoire hélicoïdale d'un pas égal à la largeur axiale maximale lam des indenteurs (4), les angles des trajectoires hélicoïdales (b, -b) respectifs, sur chaque surface porteuse externe utile (31, 32), par rapport à la perpendiculaire à l'axe de révolution (2) du galet (1) étant de signes opposés d'une surface porteuse externe utile (31, 32) à l'autre.

2. Galet (1) d'entrainement métallique selon l'une quelconque des revendications précédentes dans lequel les indenteurs (4) ont des longueurs circonférentielles lci variables circonférentiellement dans une plage de valeurs de plus ou moins 25% autour de la longueur circonférentielle moyenne lc.

3. Galet (1) d'entrainement métallique selon l'une quelconque des revendications précédentes dans lequel les indenteurs (4) sont en acier inoxydable d'une dureté Vickers au moins égale à 560.

4. Galet (1) d'entrainement métallique selon l'une quelconque des revendications précédentes dans lequel la surface porteuse externe (3) comprend à la base de chaque indenteur un orifice (5) apte à évacuer l'eau depuis la surface porteuse externe (3) vers l'axe de rotation (2) du galet (1).

5. Dispositif comprenant un objet en rotation, une bande de mélange caoutchouteux et un galet (1) d'entrainement métallique selon l'une quelconque des revendications précédentes dans lequel ledit galet (1) entraîne par contact l' objet en rotation, les indenteurs (4) dudit galet étant en contact en rotation avec la bande de mélange caoutchouteux.

6. Dispositif selon la revendication 5 dans lequel le mélange caoutchouteux constituant la bande de contact avec les indenteurs, a une dureté Shore A comprise entre 55 et 75, et une température de transition vitreuse comprise entre -15°C et 0°C.

7. Véhicule léger tel qu'un vélo, tricycle, fauteuil roulant comprenant le dispositif selon l'une des revendications 5 ou 6 dans lequel le galet (1) entraine au moins une roue du véhicule par contact en rotation avec la bande de mélange caoutchouteux.

8. Véhicule léger tel qu'un vélo, tricycle, fauteuil roulant comprenant le dispositif selon l'une des revendications 5 ou 6 dans lequel le galet (1) d'entrainement métallique entraine au moins une roue par contact en rotation avec au moins un pneumatique, le contact se faisant sur le flanc dudit pneumatique et dans lequel l'angle (a) de la génératrice du tronc de cône avec l'axe de révolution du galet est compris entre 0° et 3° de préférence entre 1° et 2°.

## Patentansprüche

1. Metallische Antriebsrolle (1), umfassend:
• Eine Umdrehungsachse (2),
• Eine kegelstumpfförmige äußere tragende Fläche (3), umfassend eine oder mehrere äußere tragende Nutzflächen (31, 32), die zwischen zwei Umfangsebenen enthalten sind,
• wobei die tragende(n) Nutzaußenfläche(n) (31, 32) eine Vielzahl von Eindringkörpern (4) trägt bzw. tragen
• wobei die Eindringkörper (4) eine radiale Höhe (hr) zwischen 0,5 mm und 5 mm, eine mittlere umfängliche Länge lc, eine maximale axiale Breite lam aufweisen und mit einer scharfen Spitze enden, wobei die Endringkörper (4) mindestens 80 % jeder äußeren tragenden Nutzfläche (31, 32) bedecken,
• **Dadurch gekennzeichnet, dass** bei jeder äußeren tragenden Nutzfläche (31, 32) die orthogonalen Projektionen der scharfen Spitzen der Eindringkörper (4) auf die Umdrehungsachse (2) der Rolle (1) auf der Umdrehungsachse (2) der Rolle (1) im Wesentlichen gleichverteilt sind,
• dass die metallische Antriebsrolle (1) zwei äußere tragende Nutzflächen (31, 32) umfasst, wobei auf jeder äußeren tragenden Nutzfläche (31, 32) die Eindringkörper (4) entlang einer gewendelten Bahn mit einer Steigung gleich der maximalen axialen Breite lam der Eindringkörper (4) verteilt sind, wobei die Winkel der jeweiligen gewendelten Bahnen (b, -b) auf jeder äußeren tragenden Nutzfläche (31, 32) in Bezug auf die Senkrechte zu der Umdrehungsachse (2) der Rolle (1) von einer äußeren tragenden Nutzfläche (31, 32) zur anderen entgegengesetzte Vorzeichen haben.

2. Metallische Antriebsrolle (1) nach einem der vorhergehenden Ansprüche, wobei die Eindringkörper (4) umfängliche Längen lci aufweisen, die in einem Wertebereich von plus oder minus 25 % um die mittlere umfängliche Länge lc herum umfänglich variabel sind.

3. Metallische Antriebsrolle (1) nach einem der vorhergehenden Ansprüche, wobei die Eindringkörper (4) aus nichtrostendem Stahl mit einer Vickers-Härte von mindestens 560 sind.

4. Metallische Antriebsrolle (1) nach einem der vorhergehenden Ansprüche, wobei die äußere tragende Fläche (3) an der Grundseite jedes Eindringkörpers eine Öffnung (5) umfasst, die geeignet ist, das Wasser von der äußeren tragenden Fläche (3) zu der Umdrehungsachse (2) der Rolle (1) hin abzuführen.

5. Vorrichtung, umfassend einen drehenden Gegenstand, einen Kautschukmischungsstreifen und eine metallische Antriebsrolle (1) nach einem der vorhergehenden Ansprüche, wobei die Rolle (1) den drehenden Gegenstand durch Kontakt antreibt, wobei die Eindringkörper (4) der Rolle in Rotationskontakt mit dem Kautschukmischungsstreifen sind.

6. Vorrichtung nach Anspruch 5, wobei die Kautschukmischung, aus welcher der Kontaktstreifen zu den Eindringkörpern besteht, eine Shore-A-Härte zwischen 55 und 75 und eine Glasübergangstemperatur zwischen -15 °C und 0 °C aufweist.

7. Leichtes Fahrzeug wie ein Fahrrad, Dreirad, Rollstuhl mit der Vorrichtung nach einem der Ansprüche 5 oder 6, wobei die Rolle (1) mindestens ein Rad des Fahrzeugs durch Rotationskontakt mit dem Kautschukmischungsstreifen antreibt.

8. Leichtes Fahrzeug wie ein Fahrrad, Dreirad, Rollstuhl mit der Vorrichtung nach einem der Ansprüche 5 oder 6, wobei die metallische Antriebsrolle (1) mindestens ein Rad durch Rotationskontakt mit mindestens einem Reifen antreibt, wobei der Kontakt an der Flanke des Reifens stattfindet, und wobei der Winkel (a) der Erzeugenden des Kegelstumpfes mit der Umdrehungsachse der Rolle zwischen 0° und 3°, bevorzugt zwischen 1° und 2°, liegt.

## Claims

1. Metal drive roller (1) comprising:
• An axis of rotation (2),
• A frustoconical outer load-bearing surface (3) comprising one or more usable outer load-bearing surfaces (31, 32) arranged between two circumferential planes,
• the one or more usable outer load-bearing surfaces (31, 32) comprising a plurality of indenting elements (4)
• the indenting elements (4) having a radial height (hr) of between 0.5 mm and 5 mm, a mean circumferential length lc, a maximum axial width lam, and ending with a sharp point, the indenting elements (4) covering at least 80% of each usable outer load-bearing surface (31, 32),
• **Characterized in that,** for each usable outer load-bearing surface (31,32), the orthogonal projections of the sharp points of the indenting elements (4) onto the axis of rotation (2) of the roller (1) are substantially equally distributed on the axis of rotation (2) of the roller (1),
• **in that** the metal drive roller (1) comprises two usable outer load-bearing surfaces (31, 32), in which, on each usable outer load-bearing surface (31, 32), the indenting elements (4) are distributed along a helical path with a pitch equal to the maximum axial width lam of the indenting elements (4), the angles of the respective helical paths (b, -b), on each usable outer load-bearing surface (31, 32), in relation to the perpendicular to the axis of rotation (2) of the roller (1) having opposite signs from one usable outer load-bearing surface (31, 32) to the other.

2. Metal drive roller (1) according to any one of the preceding claims, in which the circumferential lengths lei of the indenting elements (4) are variable around the circumference within a range of values of more or less 25% than the mean circumferential length lc.

3. Metal drive roller (1) according to any one of the preceding claims, in which the indenting elements (4) are made of stainless steel with a Vickers hardness of at least 560.

4. Metal drive roller (1) according to any one of the preceding claims, in which the outer load-bearing surface (3) comprises an orifice (5) at the base of each indenting element to drain the water from the outer load-bearing surface (3) towards the axis of rotation (2) of the roller (1).

5. Device comprising a rotating object, a rubber-compound strip and a metal drive roller (1) according to any one of the preceding claims, in which said roller (1) drives the rotating object by contact, the indenting elements (4) of said roller being in rotary contact with the rubber-compound strip.

6. Device according to Claim 5, in which the rubber compound forming the contact strip with the indenting elements has a Shore A hardness of between 55 and 75, and a glass transition temperature of between -15°C and 0°C.

7. Light vehicle such as a bicycle, tricycle or wheelchair comprising the device according to either of Claims 5 and 6, in which the roller (1) drives at least one wheel of the vehicle by rotary contact with the rubber-compound strip.

8. Light vehicle such as a bicycle, tricycle or wheelchair comprising the device according to either of Claims 5 and 6, in which the metal drive roller (1) drives at least one wheel by rotary contact with at least one tyre, the contact occurring on the sidewall of said tyre, and in which the angle (a) of the generatrix of the truncated cone with the axis of rotation of the roller is between 0° and 3°, preferably between 1° and 2°.
